# EUROPÄISCHE PATENTSCHRIFT

(11) **EP 1 816 059 B1**
(45) Veröffentlichungstag und Bekanntmachung des Hinweises auf die Patenterteilung: **25.02.2009**
(21) Anmeldenummer: 07101457.5
(22) Anmeldetag: 31.01.2007
(51) Int. Cl.: B62D 53/06

(54) **Mit einem Zugfahrzeug über einen Schwanenhals kuppelbares Schwerstlastfahrzeug**
Super-heavy lorry coupled to a tractor through a gooseneck
Poids lourd accouplé au véhicule tracteur par un col de cygne

(30) Priorität: 03.02.2006 DE 102006004930
(43) Veröffentlichungstag der Anmeldung: 08.08.2007
(73) Patentinhaber: Scheuerle Fahrzeugfabrik GmbH, 74629 Pfedelbach (DE)
(72) Erfinder: Bannert, Kurt, 74613, Öhringen (DE); Hauf, Reinhard, 74613, Öhringen (DE)
(74) Vertreter: Leitner, Waldemar

(56) Entgegenhaltungen:
- EP-A- 0 512 862
- DE-A1- 2 809 628
- DE-U1-4202005 007 52
- GB-A- 1 420 634

## Beschreibung

Die Erfindung betrifft ein Schwerstlastfahrzeug mit
- einem zur Kupplung des Schwerstlastfahrzeuges an ein Zugfahrzeug auf das Zugfahrzeug aufsattelbaren Schwanenhals,
- einer dem Schwanenhals zugeordneten hydraulischen Verdrängeranordnung, deren Hydraulikdrücke die vom Schwanenhals auf das Zugfahrzeug abgetragene Last bestimmen, und
- mehreren hydraulisch mit der Verdrängeranordnung kommunizierenden und damit die Hydraulikdrücke in der Verdrängeranordnung bestimmenden Radabstützaggregaten.

Ein derartiges Schwerstlastfahrzeug ist aus der GB 1,420,634 bekannt. Das darin beschriebene Schwerstlastfahrzeug weist ein Zugfahrzeug auf, das mit dem Schwerstlastfahrzeug über einen auf das Zugfahrzeug aufsattelbaren Schwanenhals gekoppelt ist. Am Schwanenhals ist eine hydraulische Verdrängeranordnung angeordnet, deren Hydraulikdrücke die vom Schwanenhals auf das Zugfahrzeug abgetragenen Last bestimmen. Hierbei wird die durch die Verdrängeranordnung übertragene Last durch die Radlast bestimmt, welche auf einen Radsatz des Schwerstlastfahrzeugs wirkt. Mit der Verdrängeranordnung kommunizierende Radabstützaggregate bestimmen damit die Hydraulikdrücke in der Verdrängeranordnung. Nachteilig an dem bekannten Schwerstlastfahrzeug ist, dass das Verhältnis zwischen der auf das Zugfahrzeug abgetragenen Last und den Radlasten des Schwerlastfahrzeuges nicht veränderbar ist.

Die DE 20 2005 007 524 U1 beschreibt einen Schwanenhals für ein Schwerlastfahrzeug, wobei der Schwanenhals eine starr mit einer Plattform eines Aufliegers verbindbare und von dieser abkuppelbare Platte und einen Arm zum Abstützen auf einem Sattel einer Zugmaschine umfasst. Der Arm weist einen überstehenden Kupplungsbolzen zum Ankuppeln an den Sattel der Zugmaschine auf und ist durch eine Stütze mit der Platte verbunden. Ein hydraulischer Zylinder steuert die Positionierung des Kupplungsbolzens in bezug auf die Platte. Um die Gesamtlänge eines mit einem Schwanenhals ausgestatteten Schwerlastfahrzeugs zu verringern, ist vorgesehen, dass der Arm eine mit dem unter der Platte nach unten. überstehenden Kupplungsbolzen versehene Kupplungsplatte aufweist, die sich um den Arm um einen. Querbolzen unter der Einwirkung des hydraulischen Steuerzylinders dreht, der mit der Platte verbunden und auf den Arm abgestützt ist, der starr mit der Stütze verbunden ist, die ihrerseits mit der Platte über ihren Fuß starr verbunden ist.

Aus der DE 28 09 628 C2 ist ein Schwerstlastfahrzeug bekannt, bei dem der gesamte Schwanenhals oder dessen auf die Sattelkupplung des Zugfahrzeuges aufsattelbares Kupplungsteil mittels einer hydraulischen Verdrängeranordnung höhenbeweglich gehaltert ist, so dass der Hydraulikdruck in der Verdrängeraanordnung ein Maß für die auf das Zugfahrzeug abgetragene Last ist. Da die Verdrängeranordnung ihrerseits hydraulisch mit hydraulischen Radabstützaggregaten des Schwerstlastfahrzeuges kommuniziert, ist der hydraulische Druck in der Verdrängeranordnung auch vom Gewicht der auf dem Schwerstlastfahrzeug transportierten Last bzw. den davon verursachten Radlasten abhängig. Im Ergebnis wird also bei erhöhter Radlast auch eine erhöhte Last auf das Zugfahrzeug abgetragen. Desweiteren sind aufgrund der hydraulischen Verbindung zwischen den Radabstützaggregaten und der Verdrängeranordnung am Schwanenhals vertikale Relativbewegungen zwischen Zugfahrzeug und Schwerstlastfahrzeug beim Überfahren von Bodenunebenheiten ohne weiteres möglich, und zwar ohne Änderung der Radlasten bzw. der auf das Zugfahrzeug abgetragenen Last. Denn innerhalb des konstruktiv vorgegebenen Bewegungsbereiches der Verdrängeranordnung und der Radabstützaggregate bleibt das Verhältnis der Lasten, die einerseits auf das Zugfahrzeug abgetragen bzw. andererseits über die Radabstützaggregate auf die zugeordneten Räder wirken, unverändert.

Nach der DE 28 09 628 ist ein hydraulisches Zweikreissystem vorgesehen, derart, dass ein auf der einen Fahrzeugseite angeordnetes Aggregat der dem Schwanenhals zugeordneten Verdrängeranordnung nur mit Radabstützaggregaten auf dieser Fahrzeugseite kommuniziert, während ein auf der anderen Fahrzeugseite angeordnetes weiteres Aggregat der Verdrängeranordnung nur in hydraulischer Verbindung mit Radabstützaggregaten auf der anderen Fahrzeugseite steht. Dadurch soll eine erhöhte Stabilität des Schwerstlastfahrzeuges gegenüber Wankbewegungen, d.h. Rotationsbewegungen des Schwerstlastfahrzeuges bezüglich seiner Mittellängsachse, für den Fall erreicht werden, dass die zu transportierende Last auf dem Vordererbereich, d.h. in der Nähe des Schwanenhalses, auf der Ladefläche des Schwerstlastfahrzeuges gelagert ist.

Aus der US 2,475,443 ist ein Sattelauflieger bekannt, dessen Ladeplattform bei der Beladung auf den Untergrund bzw. die Fahrbahn abgesenkt werden kann. Dazu besitzt der Sattelauflieger hydraulische Verdängeraggregate, mit denen die Räder des Sattelaufliegers relativ zur Ladeplattform entsprechend weit vertikal verstellt werden können. Außerdem sind weitere hydraulische Verdrängeraggregate vorgesehen, die eine Höhenverstellung des Schwanenhalses gegenüber der Ladeplattform ermöglichen, so dass der Sattelauflieger bei auf dem Untergrund aufliegender Ladeplattform vom Zugfahrzeug getrennt bzw. das Zugfahrzeug den Schwanenhals zur Ankupplung des Sattelaufliegers unterfahren kann.

Die Erfindung steht im Zusammenhang mit dem Problem, das Verhältnis zwischen der auf das Zugfahrzeug abgetragenen Last und den Radlasten derjenigen Räder des Schwerstlastfahrzeuges, die den mit der Verdrängeranordnung des Schwanenhalses kommunizierenden Radabstützaggregaten zugeordnet sind, verändern zu können. Bei bisher auf dem Markt erhältlichen Schwerstlastfahrzeugen ist zu diesem Zweck vorgesehen, die Verdrängeranordnung am Schwanenhals in unterschiedlichen Positionen anzubringen, derart, dass das Übersetzungsverhältnis zwischen dem hydraulischen Druck in der Verdrängeranordnung und der auf das Zugfahrzeug abgetragenen Last verändert wird. Dabei ist jedoch problematisch, dass die Montage der Verdrängeranordnung fehlerhaft erfolgen kann und insofern mit schweren Schäden am Schwerstlastfahrzeug gerechnet werden muss. Dementsprechend ist es Aufgabe der Erfindung, eine Anordnung zu schaffen, mit der sich das Verhältnis zwischen der auf das Zugfahrzeug abgetragenen Last und den Radlasten mit hoher Betriebssicherheit verändern bzw. einstellen lässt.

Diese Aufgabe wird bei einem Schwerstlastfahrzeug der eingangs angegebenen Art erfindungsgemäß dadurch gelöst, dass die Verdrängeranordnung Positiv- und Negativkammern aufweist, wobei die Hydraulikdrücke in den Positivkammern zu Stellkräften führen, die den von den Hydraulikdrücken in den Negativkammern bewirkten Stellkräften entgegenwirken, so dass durch die Positiv- und Negativkammern erzeugten Hydraulikdrücke einander entgegengerichtete Kräfte in Zug-oder Schubrichtung der Verdrängeranordnung bewirken, und die in vorgebbarer Kombination mit den Radabstützaggregaten und/oder einem relativ drucklosen Hydraulikreservoir verbindbar sind, dass die Verdrängeranordnung ein erstes und ein zweites Verdrängerteil aufweist,
dass das erste Verdrängerteil eine rohrförmige Kolbenstange mit einem endseitig daran angeordneten und dem zweiten Verdrängerteil zugewandten Ringkolben aufweist, der in einem Ringraum des zweiten Verdrängerteils verschiebbar angeordnet ist und dabei eine erste Arbeitskammer von einer zweiten Arbeitskammer trennt,
dass die erste Arbeitskammer eine der beiden Positivkammern und die zweite Arbeitskammer die Negativkammer bildet und
dass das zweite Verdrängerteil einen plungerartigen Kolben aufweist, welcher im Rohrinnenraum in der Kolbenstange des ersten Verdrängerteils verschiebbar gelagert ist, und
dass das erste Verdrängerteil und der plungerartige Kolben des zweiten Verdrängerteils eine dritte Arbeitkammer begrenzen,
wobei die dritte Arbeitskammer die zweite Positivkammer bildet, und dass die Verdrängeranordnung über eine Ventilanordnung mit zumindest einem Ventil direkt oder indirekt mit zumindest einem Radabstützaggregat oder einem Hydraulikreservoir verbindbar ist.

Die Erfindung beruht also auf dem allgemeinen Gedanken, die dem Schwanenhals zugeordnete Verdrängeranordnung als Mehrkammersystem auszubilden, wobei die Hydraulikdrücke in den einen Kammern (Positivkammern) zu Stellkräften führen, die den von den Hydraulikdrücken in anderen Kammern (Negativkammern) bewirkten Stellkräften entgegenwirken. Bei der Erfindung wird also lediglich eine Umschaltventilanordnung benötigt, um die verschiedenen Kammern der Verdrängeranordnung in unterschiedlicher Kombination entweder mit dem relativ drucklosen Hydraulikreservoir oder den Radabstützaggregaten zu verbinden. Fehlbedienungen oder gar Fehlmontagen sind damit ausgeschlossen.

Die Verdrängeranordnung weist erfindungsgemäß eine erste und eine davon fluidisch trennbare zweite Positivkammer auf. Dies bietet den großen Vorteil, hohe Abstützlasten der Verdrängeranordnung durch ein Verbinden, d.h. ein Parallelschalten, der beiden Positivkammern zu realisieren, während geringe Abstützlasten durch Druckmittelzufuhr zu lediglich einer der beiden Positivkammern zu erreichen sind.

Bei der erfindungsgemäßen Lösung ist die Verdrängeranordnung mit hydraulischen Radabstützaggregaten der Fahrzeugräder druckverbunden. Dies bewirkt, dass die von der Verdrängeranordnung erzeugte Sattellast abhängig ist von der von dem Schwerstlastfahrzeug aufgenommenen zu transportierenden Last. Hohe Lasten bedeuten somit einen hohen Druck in den Radabstützaggregaten und gleichzeitig einen hohen Druck in der Verdrängeranordnung, welche dann über den Schwanenhals eine zu der zu transportierenden großen Last entsprechend hohe Sattellast erzeugt. Die Sattellast wiederum ist verantwortlich für die Achslast des Zugfahrzeuges, so dass durch die Druckverbindung zwischen der Verdrängeranordnung und den Radabstützaggregaten des Schwerstlastfahrzeuges die Achslast des Zugfahrzeuges und damit dessen Traktion mit einer Fahrbahn bestimmt werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Dabei zeigen, jeweils schematisch,
- Fig. 1: eine Seitenansicht eines mit einem Zugfahrzeug über einen Schwanenhals gekuppelten Schwerstlastfahrzeugs,
- Fig. 2: eine Darstellung wie in Fig. 1, jedoch mit geneigtem Schwanenhals,
- Fig. 3: eine schematische Schnittsdarstellung einer erfindungsgemäßen Verdrängeranordnung,
- Fig. 4: einen Ausschnitt einer Seitenansicht im Bereich des Schwanenhalses mit einem möglichen Hydrauliksystem,
- Fig. 5a-f: eine Schnittdarstellung der Verdrängeranordnung bei unterschiedlichen Ventilstellungen.

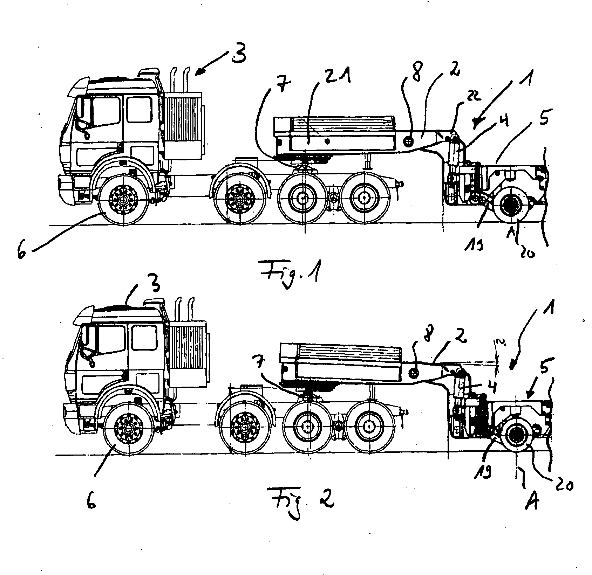

Entsprechend Fig. 1 weist ein Schwerstlastfahrzeug 1, welches über einen Schwanenhals 2 mit einem Zugfahrzeug 3 gekoppelt ist, zwischen einem Chassis des Schwerstlastfahrzeuges 1 und dem Schwanenhals 2 zumindest eine Verdrängeranordnung 4 auf. Von dem Schwerstlastfahrzeug 1 ist lediglich exemplarisch eine Achslinie A dargestellt, wobei derartige Schwerstlastfahrzeuge 1 im Normalfall weitere in Fahrtrichtung hinter dieser Achslinie A angeordnete Achslinien aufweisen. Auf einer Ladefläche 5 des Schwerstlastfahrzeugs 1 können große Lasten, beispielsweise Baumaschinen, transportiert werden.

Das Zugfahrzeug 3 weist gemäß den Ausführungsbeispielen der Fig. 1 und 2 insgesamt vier Achsen auf, wobei zumindest die in Fahrtrichtung vorderste Achse mit lenkbaren Rädern 6 ausgestattet ist. Über eine Kupplung 7 ist das Zugfahrzeug 3 mit dem Schwerstlastfahrzeug 1 gekoppelt, wobei eine über den Schwanenhals 2 auf das Zugfahrzeug 3 wirkende Sattellast die Achslasten des Zugfahrzeuges 3 und damit dessen Traktionsvermögen bestimmt. Der in der Verdrängeranordnung 4 herrschende Druck wird dabei von der zu transportierenden Last bestimmt.

Der Schwanenhals 2 ist entsprechend den Fig. 1 und 2 um eine im wesentlichen parallel zu den Achslinien des Zugfahrzeugs 3 bzw. des Schwerstlastfahrzeugs 1 verlaufende Achse 8 (senkrecht zur Bildebene) knickbar. Die Knickmöglichkeit wird dabei bei der Betrachtung der Fig. 2 im Unterschied zur Fig. 1 deutlich. Selbstverständlich ist auch eine Knickmöglichkeit entgegen des Uhrzeigersinnes möglich. An einem dem Zugfahrzeug 3 zugewandten Ende 21 des Schwanenhalses 2 ist dieser mit dem Zugfahrzeug 3 über die Kupplung 7 gekoppelt, wogegen er an einem dem Zugfahrzeug 3 abgewandten Ende 22 mit der Verdrängeranordnung 4 schwenkbar verbunden ist. Die Kraft, die die Verdrängeranordnung 4 auf das dem Zugfahrzeug 3 abgewandte Ende 22 des Schwanenhalses 2 überträgt, bestimmt somit die Sattellast, mit welcher der Schwanenhals 2 mit seinem dem Zugfahrzeug 3 zugewandten Ende 21 auf die Kupplung 7 und damit auf das Zugfahrzeug 3 drückt. Hierbei ist wichtig, dass die vom Schwanenhals 2 des Schwerstlastfahrzeugs 1 auf das Zugfahrzeug 3 ausgeübte Sattellast stets so hoch ist, dass eine ausreichende Traktion der angetriebenen Achsen des Zugfahrzeuges 3 gewährleistet ist.

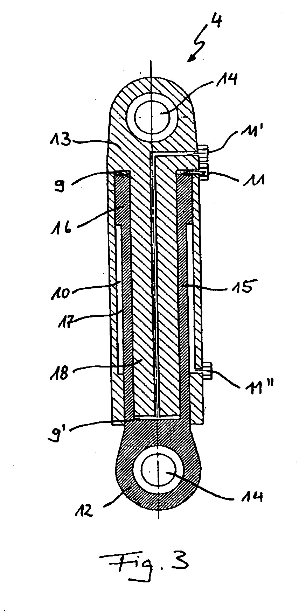

Gemäß Fig. 3 weist die als 3-Flächen-Hubzylinder ausgebildete Verdrängeranordnung 4 zwei Positivkammern 9 und 9' und eine Negativkammer 10 auf, welche in vorgebbarer Kombination mit Hydraulikmedium beaufschlagbar sind. Die beiden Positivkammern 9, 9' und die Negativkammer 10 weisen unterschiedliche Querschnittsflächen auf. Eine Erhöhung des Hydraulikvolumens in den Positivkammern 9 und 9' bewirkt bei gleichzeitig druckloser Negativkammer 10 eine Verlängerung der Verdrängeranordnung 4, wogegen eine Druckmittelzufuhr in die Negativkammer 10 bei gleichzeitig drucklosen Positivkammern 9 eine Verkürzung derselben bzw. ein sich Zusammenziehen der Verdrängeranordnung 4 bewirkt.

Generell besteht die Verdrängeranordnung 4 aus einem ersten Verdrängerteil 12 und einem damit zusammenwirkenden zweiten Verdrängerteil 13 und weist vorzugsweise eine im wesentliche zylindrische Form auf. Darüber hinaus weist jedes der Verdrängerteile 12, 13 jeweils ein Lagerauge 14 auf, über welches die Verdrängeranordnung 4 beispielsweise mittels eines Bolzens am Schwanenhals 2 bzw. am Schwerstlastfahrzeug 1 anlenkbar ist.

Das erste Verdrängerteil 12 besitzt eine rohrförmige Kolbenstange 15 mit einem endseitig daran angeordneten und dem zweiten Verdrängerteil 13 zugewandeten Ringkolben 16. Der Ringkolben 16 ist dabei in einem Ringraum 17 des zweiten Verdrängerteils 13 verschiebbar angeordnet, der gleichzeitig die Negativkammer 10 bildet, und trennt gemäß Fig. 3 die Positivkammer 9 von der Negativkammer 10.

Das zweite Verdrängerteil 13 weist einen plungerartigen Kolben 18 auf, welcher im Rohrinnenraum in der Kolbenstange 15 des ersten Verdrängerteils 12 verschiebbar gelagert ist. Das erste Verdrängerteil 12 und der plungerartige Kolben 18 begrenzen dabei die zweite Positivkammer 9', wobei eine hydraulische Zuleitung zur zweiten Positivkammer 9' im wesentlichen zentral im plungerartigen Kolben 18 nahe bis zur Ausnehmung 14 verläuft und dann radial nach außen hin zur Anschlussleitung 11' geführt ist. Die Negativkammer 10 ist über eine Anschlussleitung 11" an das hydraulische System angeschlossen.

Gemäß der Erfindung ist die Verdrängeranordnung 4 mit hydraulischen Radabstützaggregaten 19 der Fahrzeugräder 20 des Schwerstlastfahrzeugs 1 druckverbunden (vgl. Fig. 1). Somit bestimmt eine auf der Ladefläche 5 des Schwerstlastfahrzeugs 1 zu transportierende Last den Druck in den hydraulischen Radabstützaggregaten 19 und damit auch einen hydraulischen Druck in der Verdrängeranordnung 4. Der so über die zu transportierende Last vorgegebene hydraulische Druck in der Verdrängeranordnung 4 bestimmt wiederum über den Schwanenhals 2 die auf die Kupplung 7 bzw. das Zugfahrzeug 3 zu übertragende Sattellast. Somit ist die Sattellast abhängig von der zu transportierenden Last und nicht mehr abhängig von einem für die Verdrängeranordnung 4 gewählten Anlenkpunkt am Schwanenhals 2. Dabei ist es möglich, je nach gewünschtem Höhenniveau ein größeres oder ein kleineres Hydraulikvolumen in die Radabstützaggregate 19 der Fahrzeugräder 20 zu pumpen. Die Verdrängeranordnung 4 ist über eine Ventilanordnung 24 mit den Radabstützaggregaten 19 verbindbar.

Um eine möglichst stabile und an eventuelle Unebenheiten einer Fahrbahn angepasste Straßenlage des Schwerstlastfahrzeugs 1 zu gewährleisten, sind die Radabstützaggregate 19 zu drei voneinander unabhängigen Gruppen zusammenschaltbar, woraus sich günstigsten Falls eine Dreipunktabstützung des Schwerstlastfahrzeuges 1 auf der Fahrbahn ergibt. Eine derartige Dreipunktabstützung kann beispielsweise durch Zusammenschalten mehrerer in Fahrtrichtung vorne gelegenen Achslinien des Schwerstlastfahrzeuges 1 sowie durch ein seitenweises Zusammenschalten der in Fahrtrichtung dahinter gelegenen Achslinien des Schwerstlastfahrzeugs 1 erfolgen.

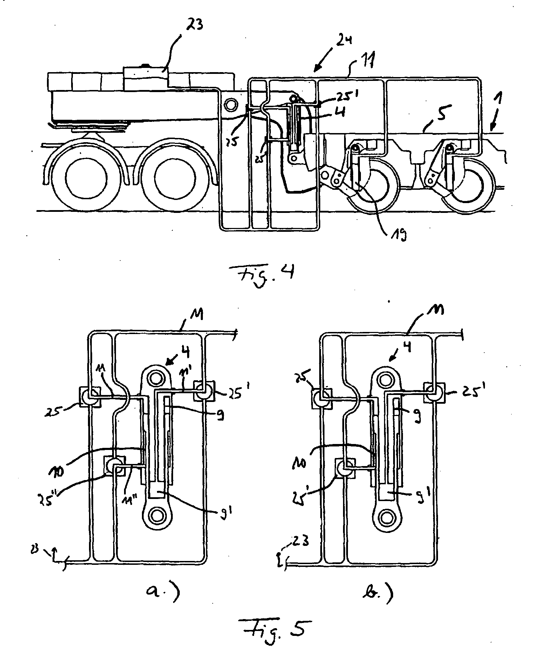

In Fig. 4 ist eine mögliche Anbringungsform der Verdrängeranordnung 4 am Schwanenhals 2 gezeigt, wobei jede Verdrängeranordnung 4 über Anschlussleitungen 11 sowohl mit einem im wesentlichen drucklosen Hydraulikreservoir 23 als auch mit zumindest zwei Radabstützaggregaten 19 verbunden ist. Jeder Positivkammer 9 und 9' und der Negativkammer 10 ist dabei ein zugehöriges Ventil 25 vorgeschaltet, das Teil der Ventilanordnung 24 ist, so dass die einzelnen Positivkammern 9 und 9' bzw. die Negativkammer 10 mit dem Hydrauliksystem verbindbar sind bzw. von diesem getrennt werden können. Der im Hydrauliksystem bzw. in den Anschlussleitungen 11 herrschende hydraulische Druck wird vom Eigengewicht des Schwerstlastfahrzeugs 1 bzw. von einer auf dessen Ladefläche 5 zu transportierende Last bestimmt. Die über den Schwanenhals 2 auf das Zugfahrzeug 3 zu übertragende Sattellast über die Stellung der Ventile 25, 25', 25" beeinflusst werden, so dass stets die für die Traktion erforderliche Achslast erreicht wird.

In den Fig. 5a bis f ist jeweils eine Verdrängeranordnung 4 mit den zugehörigen Ventilen 25 bis 25" gezeigt, wobei sich die Fig. 5a bis f jeweils durch unterschiedliche Ventilstellungen unterscheiden. Gemäß der Fig. 5a sind die Ventile 25 und 25' so gestellt, dass die beiden Positivkammern 9 und 9' mit Hydraulikmedium beaufschlagt werden können, während die Negativkammer 10 mit dem an sich drucklosen und gemäß der Fig. 5a nicht dargestellten Hydraulikreservoir 23 verbunden ist. Somit wirken die beiden Positivkammern 9 und 9' zusammen.

Demgegenüber bewirkt eine Ventilstellung gemäß Fig. 5b, dass sowohl die beiden Positivkammern 9 und 9' über die zugehörigen Ventile 25 und 25' mit der jeweils zugehörigen Anschlussleitung 11, 11' verbunden sind als auch die Negativkammer 10 über das zugehörige Ventil 25" mit der Anschlussleitung 11". Dies bedeutet, dass die Negativkammer 10 den beiden Positivkammern 9 und 9' bezüglich einer hydraulischen Stellkraft entgegenwirkt und eine im Vergleich zur Fig. 5a geringere an den Schwanenhals 2 übertragbare Kraft erzeugt wird.

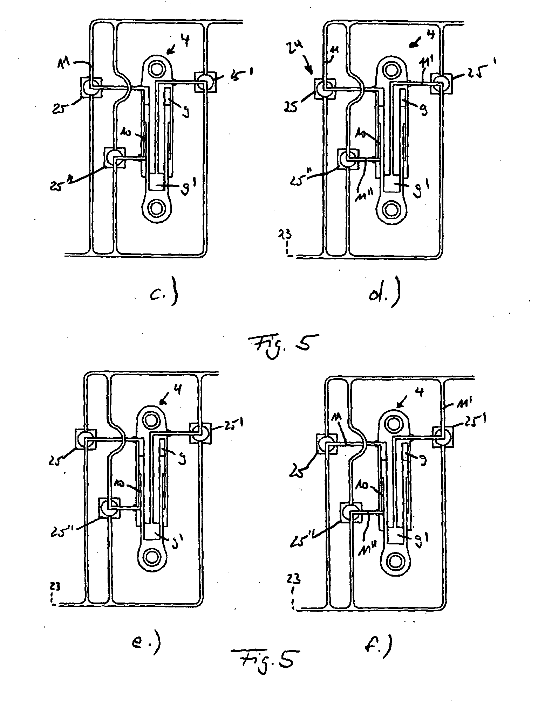

In der Fig. 5c ist lediglich die Positivkammer 9 über das zugehörige Ventil 25 mit der Anschlussleitung 11 verbunden, während die Positivkammer 9' und die Negativkammer 10 über die zugehörigen Ventile 25' und 25" mit dem drucklosen Hydraulikreservoir 23 verbunden sind. Somit steht nur die Positivkammer 9 zur Erzeugung einer hydraulischen Stellkraft zur Verfügung. In der Darstellung gemäß Fig. 5d ist die Positivkammer 9' über das zugehörige Ventil 25' mit dem drucklosen Hydraulikreservoir 23 verbunden, während die andere Positivkammer 9 über das Ventil 25 und die Negativkammer 10 über das Ventil 25" mit der Anschlussleitung 11 druckverbunden ist. Die daraus resultierende Stellkraft ergibt sich somit aus einer in der Positivkammer 9 erzeugten Stellkraft abzüglich der in der Negativkammer 10 erzeugten Stellkraft.

In der Darstellung gemäß Fig. 5e ist lediglich die Positivkammer 9' über das zugehörige Ventil 25' mit der Anschlussleitung 11' druckverbunden, während die andere Positivkammer 9 und die Negativkammer 10 über das jeweils zugehörige Ventil 25 bzw. 25" mit dem drucklosen Hydraulikreservoir 23 verbunden sind. Die in der Verdrängeranordnung 4 somit wirkende Stellkraft wird daher ausschließlich von der Positivkammer 9 bestimmt. Schließlich zeigt Fig. 5f eine Ventilstellung, bei welcher die Positivkammer 9 über das zugehörige Ventil 25 mit dem drucklosen Hydraulikreservoir 23 verbunden ist, während die andere Positivkammer 9' und die Negativkammer 10 jeweils über ihre zugehörigen Ventile 25' bzw. 25" mit der Anschlussleitung 11' und 11" und damit mit den daran angeschlossenen Radabstützaggregaten 19 druckverbunden sind. Die Negativkammer 10 wirkt dabei der Positivkammer 9' entgegen, während die weitere Positivkammer 9 keinen Einfluss auf die in der Verdrängeranordnung 4 erzeugte Stellkraft hat, sofern das angeschlossene Hydraulikreservoir 23 drucklos ist.

Mit der erfindungsgemäßen Ausbildung der Verdrängeranordnung 4 als Drei-Flächen-Hubzylinder mit zwei Positivkammern 9 und 9' und einer Negativkammer 10 sowie jeweils zugeordneten Ventilen 25, 25' und 25" können somit nur durch eine einfache Änderung der Ventilstellungen sechs verschiedene Stellkräfte in der Verdrängeranordnung 4 realisiert werden. Die Ventile 25, 25', 25" können dabei von einem geschlossenen über einen teilweise geöffneten in einen vollständig geöffneten Zustand überführt werden und umgekehrt. Über die erfindungsgemäße Anordnung der Ventile 25, 25' und 25" und die unterschiedlichen Querschnittsflächen der zwei Positivkammern 9, 9'und der Negativkammer 10 ist es möglich, unterschiedliche Sattellasten zu generieren, welche angepasst an die jeweilige Zugmaschine 3 und für eine ausreichende Achslast auf den angetriebenen Achsen sorgen, damit das Zugfahrzeug 3 die Zugkraft zuverlässig auf die Fahrbahn übertragen kann. Dabei kann auch die Anzahl der Achsen des Zugfahrzeugs berücksichtigt werden.

## Patentansprüche

1. Schwerstlastfahrzeug (1) mit
- einem zur Kupplung des Schwerstlastfahrzeuges (1) an ein Zugfahrzeug (3) auf das Zugfahrzeug aufsattelbaren Schwanenhals (2),
- einer dem Schwanenhals (2) zugeordneten hydraulischen Verdrängeranordnung (4), deren Hydraulikdrücke die vom Schwanenhals (2) auf das Zugfahrzeug (3) abgetragene Last bestimmen und
- mehreren hydraulisch mit der Verdrängeranordnung (4) kommunizierenden und damit die Hydraulikdrücke in der Verdrängeranordnung (4) bestimmenden Radabstützaggregaten (19),
**dadurch gekennzeichnet,**
- **dass** die Verdrängeranordnung (4) Positiv- und Negativkammern (9, 9'; 10) aufweist, die in vorgebbarer Kombination mit den Radabstützaggregaten (19), und/oder einem relativ drucklosen Hydraulikreservoir (23) verbindbar sind, wobei die Hydraulikdrücke in den Positivkammern zu Stellkräften führen, die den von den Hydraulikdrücken in den Negativkammern bewirkten Stellkräften entgegenwirken, so dass durch die Positiv- und Negativkammem (9, 9'; 10) erzeugten Hydraulikdrücke einanderentgegengerichtete Kräfte in Zug-oder Schubrichtung der Verdrängeranordnung (4) bewirken,
- **dass** die Verdrängeranordnung (4) ein erstes (12) und ein zweites Verdrängerteil (13) aufweist,
- **dass** das erste Verdrängerteil (12) eine rohrförmige Kolbenstange. (15) mit einem endseitig daran angeordneten und dem zweiten verdrängerteil (13) zugewandten Ringkolben (16) aufweist, der in einem Ringraum (17) des zweiten Verdrängerteils (13) verschiebbar angeordnet ist und dabei eine erste Arbeitskammer von einer zweiten Arbeitskammer trennt,
- **dass** die erste Arbeitskammer eine der beiden Positivkammern (9, 9') und die zweite Arbeitskammer die Negativkammer (10) bildet und
- **dass** das zweite Verdrängerteil (13) einen plungerartigen Kolben (18) aufweist, welcher im Rohrinnenraum in der Kolbenstange (15) des ersten Verdrängerteils (12) verschiebbar gelagert ist, und
- **dass** das erste Verdrängerteil (12) und der plungerartige Kolben (18) des zweiten Verdrängerteils (13) eine dritte Arbeitkammer begrenzen,
- wobei die dritte Arbeitskammer die zweite Positivkammer (9') bildet, und dass die Verdrängeranordnung (4) über eine Ventilanordnung (24) mit zumindest einem Ventil (25) direkt oder indirekt mit zumindest einem Radabstützaggregat (19) oder einem Hydraullkreservoir verbindbar ist.

2. Schwerstlastfahrzeug nach Anspruch 1,
**dadurch gekennzeichnet, dass** die Verdrängeranordnung (4) eine erste (9) und eine davon fluidisch trennbare zweite Positivkammer (9') aufweist.

3. Schwerstlastfahrzeug nach Anspruch 1 oder 2,
**dadurch gekennzeichnet,**
**dass** das Schwerstlastfahrzeug (1) zumindest zwei miteinander koppelbare Fahrzeugmodule aufweist, wobei ein Fahrzeugmodul den Schwanenhals trägt.

4. Schwefstlastfahrzeug nach einem der Ansprüche 1 bis 3,
**dadurch gekennzeichnet,**
**dass** die Radabstützaggregate (19) des Schwerstlastfahrzeugs (1) zu drei voneinander unabhängigen Gruppen zusammenschaltbar sind, um eine Dreipunktlagerung des Schwerstlastfahrzeugs (1) auf einer Fahrbahn zu ermöglichen.

## Claims

1. Heavy load truck (1) having
- a goose neck that can be hitched up on a towing vehicle for coupling the heavy load truck (1) with the towing vehicle (3),
- a hydraulic displacer unit (4) associated to the goose neck (2), the hydraulic pressures of which determine the loads transferred from the goose neck (2) to the towing vehicle (3), and
- a plurality of wheel supporting units (19) in fluidic communication with the displacer unit (4), which thus determine the hydraulic pressures in the displaces unit (4),
**characterized in**
- **that** the displacer unit (4) comprises positive and negative chambers (9, 9'; 10), which can be connected in predefinable combination with the wheel supporting units (19) and/or a relatively pressureless hydraulic reservoir (23), the hydraulic pressures in the positive chambers producing displacing forces that counteract the displacing forces resulting from the hydraulic pressures in the negative chambers so that the hydraulic pressures produced by the positive and negative chambers (9, 9'; 10) result in oppositely directed hydraulic pressures acting in the direction of thrust and/or in the direction of pull of the displacer unit (4),
- **that** the displacer unit (4) comprises a first (12) and a second displacer element (13),
- **that** the first displacer element (12) comprises a tubular piston rod (15) with an annular piston (16) which is provided on its one end facing the second displacer element (13) and which is arranged for displacement in an annular space (17) of the second displacer element (13) thereby separating a first working chamber from a second working chamber;
- **that** the first working chamber constitutes one of the two positive chambers (9, 9') and the second working chamber constitutes the negative chamber (10), and
- **that** the second displacer element (13) comprises a plunger-like piston (18) accommodated for displacement in the tubular interior of the piston rod (15) of the first displacer element (12), and
- **that** the first displacer element (12) and the plunger-like piston (18) of the second displacer element (13) delimit a third working chamber,
- the third working chamber constituting the second positive chamber (9'), and that the displacer unit (4) can be connected with at least one wheel supporting unit (19) or one hydraulic reservoir directly or indirectly, via a valve arrangement (24) having at least one valve (25).

2. The heavy load truck as defined in Claim 1,
**characterized in that** the displacer unit (4) comprises a first (9) and a second positive chamber (9') that can be separated from said first chamber in fluidic respect.

3. The heavy load truck as defined in Claim 1 or Claim 2,
**characterized in that** the heavy load truck (1) comprises at least two vehicle modules that can be coupled one with the other, and that one of the vehicle modules carries the goose neck.

4. The heavy load truck as defined in any of Claims 1 to 3,
**characterized in that** the wheel supporting unit (19) of the heavy load truck (1) can be connected to form three groups one independent from the other in order to permit a three-point contact to be realized between the heavy load truck (1) and the road.

## Revendications

1. Poids lourd (1) avec
- un col de cygne (2) pouvant être semi-porté sur un véhicule tracteur (3) pour l'accouplement du poids lourd (1) au véhicule tracteur,
- un dispositif de refoulement hydraulique (4) associé au col de cygne (2) dont les pressions hydrauliques déterminent la charge transférée par le col de cygne (2) sur le véhicule tracteur (3) et
- plusieurs groupes supports de roues (19) qui sont en communication hydraulique avec le dispositif de refoulement (4) et qui déterminent ainsi les pressions hydrauliques dans le dispositif de refoulement (4),
**caractérisé en ce que**
- le dispositif de refoulement (4) comporte des chambres positives et négatives (9, 9' ; 10) qui peuvent être reliées selon une combinaison prédéterminée aux groupes supports de roues (19) et/ou à un réservoir hydraulique relativement sans pression (23), dans lequel les pressions hydrauliques dans les chambres positives entrainent des forces de réglage qui s'opposent aux forces de réglage induites par les pressions hydrauliques dans les chambres négatives, de sorte que les pressions hydrauliques générées par les chambres positives et négatives (9, 9' ; 10) induisent des forces opposées les unes aux autres dans le sens de traction ou de poussée du dispositif de refoulement (4),
- le dispositif de refoulement (4) comporte une première (12) et une seconde (13) partie de refoulement,
- la première partie de refoulement (12) comporte une tige de piston tubulaire (15) avec un piston annulaire (16) disposé à l'extrémité de celle-ci et dirigé vers la seconde partie de refoulement (13), qui est disposé de manière déplaçable dans un espace annulaire (17) de la seconde partie de refoulement (13) et qui sépare ainsi une première chambre de travail d'une deuxième chambre de travail,
- la première chambre de travail forme l'une des deux chambres positives (9, 9') et la deuxième chambre de travail forme la chambre négative (10) et
- la seconde partie de refoulement (13) comporte un piston de type plongeur (18) qui est logé de manière déplaçable à l'intérieur du tube dans la tige de piston (15) de la première partie de refoulement (12), et
- la première partie de refoulement (12) et le piston de type plongeur (18) de la seconde partie de refoulement (13) délimitent une troisième chambre de travail,
- dans lequel la troisième chambre de travail forme la seconde chambre positive (9') et le dispositif de refoulement (4) peut être connecté directement ou indirectement à au moins un groupe support de roues (19) ou à un réservoir hydraulique au moyen d'un dispositif de soupape (24) comportant au moins une soupape (25).

2. Poids lourd selon la revendication 1,
**caractérisé en ce que** le dispositif de refoulement (4) comporte une première (9) chambre positive et une seconde (9') chambre positive pouvant être séparée fluidiquement de la première chambre.

3. Poids lourd selon la revendication 1 ou 2,
**caractérisé en ce que** le poids lourds (1) comporte au moins deux modules de véhicule, un module de véhicule portant le col de cygne.

4. Poids lourd selon l'une quelconque des revendications 1 à 3,
**caractérisé en ce que** les groupes supports de roues (19) du poids lourd (1) peuvent être interconnectés en trois groupes indépendants les uns des autres pour permettre un appui à trois points du poids lourd (1) sur une voie de circulation.
